# EUROPÄISCHE PATENTANMELDUNG

(11) **EP 2 053 476 A2**
(43) Veröffentlichungstag der Anmeldung: **29.04.2009**
(21) Anmeldenummer: 08018377.5
(22) Anmeldetag: 21.10.2008
(51) Int. Cl.: G05B 19/05

(54) **System zum Betreiben wenigstens eines nichtsicherheitskritischen und wenigstens eines sicherheitskritischen Prozesses**

(30) Priorität: 22.10.2007 DE 102007050708
(71) Anmelder: Phoenix Contact GmbH & Co. KG, 32825 Blomberg (DE)
(72) Erfinder: Kalhoff, Johannes, 32825 Blomberg (DE); Rahlves, Lutz, 31789 Tündern (DE); Horn, Steffen, 32825 Blomberg (DE)
(74) Vertreter: Bill, Burkart Hartmut

(57) **Zusammenfassung**

Die Erfindung schlägt zum Betreiben wenigstens eines nicht-sicherheitskritischen Applikationsprozesses und wenigstens eines sicherheitskritischen Applikationsprozesses ein Datenverarbeitungs- und -übertragungssystem vor, mit einem Datenübertragungsnetzwerk, wenigstens einem an das Netzwerk angeschlossenen nicht-sicherheitsbezogenen Netzwerkelement, das mit dem nicht-sicherheitskritischen Applikationsprozess verknüpft ist und mit wenigstens einem sicherheitsbezogenen Netzwerkelement, das mit dem sicherheitskritischen Applikationsprozess verknüpft ist, sowie mit wenigstens einer an das Netzwerk angeschlossene Mastereinrichtung, und einer von der Mastereinrichtung separat an das Netzwerk angeschlossenen sicherheitsbezogenen Servereinrichtung, wobei die sicherheitsbezogene Serverreinrichtung den wenigstens einen sicherheitskritischen Applikationsprozesses steuert, und zwar durch Verarbeitung von sicherheitsrelevanten Daten, die zur Steuerung des sicherheitskritischen Applikationsprozesses notwendig sind und durch Organisation der Übertragung der sicherheitsrelevanten Daten über wenigstens eines der Netzwerkelemente und/oder die Mastereinrichtung über das Netzwerk, und wobei die Mastereinrichtung zum Bereitstellen von Betriebsmitteln zur Übertragung der sicherheitsrelevanten Daten und Verwalten von Zugriffsregeln während der Datenübertragung über das Netzwerk ausgebildet ist.

## Beschreibung

Die Erfindung betrifft ein Datenverarbeitungs- und - übertragungssystem zum Betreiben wenigstens eines nicht-sicherheitskritischen Applikationsprozesses und wenigstens eines sicherheitskritischen Applikationsprozesses, wobei das System ein Datenübertragungsnetzwerk, wenigstens ein an das Netzwerk angeschlossenes nicht-sicherheitsbezogenes Netzwerkelement, das mit dem nicht-sicherheitskritischen Applikationsprozess verknüpft ist, und wenigstens ein sicherheitsbezogenes Netzwerkelement umfasst, das über wenigstens einen E/A-Kanal mit dem sicherheitskritischen Applikationsprozess verknüpft ist.

Bekanntermaßen wird in der Sicherheitstechnik ein Prozess als sicherheitskritisch bezeichnet, wenn dieser im Falle eines Fehlers eine nicht zu vernachlässigende Gefahr zur Folge haben kann, so dass für diesen Fall gewährleistet werden muss, dass ein sicherer Zustand eingenommen wird.

Grundsätzlich werden in der Sicherheitstechnik derzeit Sicherheitsrelais, sichere Steuerungen und Sicherheitskleinsteuerungen verwendet.

Unter Sicherheitsrelais werden elektromechanische oder elektronische Komponenten verstanden, die komplette vorkonfektionierte Sicherheitsfunktionen, welche ggf. über Schalter oder eine Verdrahtung parametrierbar sind, ausführen. An den Sicherheitsrelais werden sichere Ein- und Ausgänge direkt verdrahtet.

Unter Sicherheitskleinsteuerungen werden elektromechanische oder elektronische Komponenten verstanden, welche über einfache Hilfsmittel, z.B. durch eine geringfügig programmierbare Oberfläche oder durch Schalterkombinationen, unterschiedliche Sicherheitsfunktionen ausführen können. An den Kleinsteuerungen werden vorkonfektionierte Sicherheitsfunktionen einfach verbunden. Die Anzahl der Ein- und Ausgänge ist durch Erweiterungskomponenten in geringem Umfang ggf. flexibel erweiterbar. Zum Teil wird auch ein Netzwerkzugang mit angeboten.

Sicherheitssteuerungen hingegen bieten die Vorzüge eines flexiblen Steuerungssystems mit Netzwerkanschluss, hoher Performance und einer flexibel programmierbaren Oberfläche und genügen beispielsweise dem Standard IEC 61131.

Sichere bzw. sicherheitsgerichte Einrichtungen und Komponenten sind grundsätzlich Einrichtungen und Komponenten, die durch geeignete Maßnahmen sicher hinsichtlich der durch diese zu verarbeitenden und/oder über diese zu übertragenden Daten sind. Dies kann z.B. durch eine redundante Ausgestaltung der Verarbeitungs- oder Übertragungsstruktur, durch Hinzufügen einer Prüfsumme an die zu übertragenden Daten und/oder andere dem Fachmann an und für sich bekannte Maßnahmen erfolgen.

In aktuellen Maschinen und Anlagen werden Datenverarbeitungs- und -übertragungssysteme verwendet, die dezentrale Ein-/Ausgangs-Geräte und Steuerungen verbinden. Für den Transport von sicherheitsrelevanten Daten werden die genutzten Netzwerke durch sichere Netzwerkprotokolle unterstützt. Der verwendete Signalfluß geht von einer zentralen Sicherheitstechnik aus, in der die zu sicheren Eingangssignalen verarbeiteten sicherheitsrelevanten, in der Regel durch Sensoren erfassten sicherheitsrelevanten Eingangsdaten zur sicheren Steuerung transportiert werden, dort durch eine sichere Applikation weiterverarbeitet werden und dann zu den entsprechenden Aktoren transportiert werden.

In der Automatisierungstechnik sind derzeit zwei Tendenzen seit längerem spürbar. Zum einen die Dezentralisierung der Steuerungsfunktion und zum anderen die Integration des Sicherheitstechnik in die Steuerungs- und Netzwerktechnik.

Bei der Dezentralisierung wird die Steuerungsfunktion immer weiter in die Ausgangsebene verlagert. So wird beispielsweise die Steuerungsfunktion in begrenztem Umfang in Antrieben mit integriert. Mit der Integration der Sicherheitstechnik in Steuerungen und Netzwerke werden starke Abhängigkeiten im Applikationsprozess erzeugt. Diese Abhängigkeiten führen zu einer komplexeren Projektierung und Programmierung der Systeme.

Um dieser Situation entgegenzuwirken, werden zum Teil unterschiedliche Mechanismen verwendet. Beispielsweise die Kombination sicher und nicht-sicher auf einer gemeinsamen Steuerung; Sicher und nicht-sicher auf getrennten Steuerungen; Zustimmung vor Ort mit dezentralen sicheren Einheiten; dezentrale Sicherheitssteuerung mit zugeordneten sicheren Ein- und Ausgängen in einem Netzwerk.

Nachteilig bei der Zusammenführung von sicherer und nichtsicherer Steuerung auf einer zentralen Plattform oder auch bei der dezentralen Steuerungstechnik sind gegenseitige funktionale Abhängigkeiten, die teilweise auch wiederum sicherheitskritisch sein können. Weitere Nachteile sind Performance-Einbußen und Verfügbarkeitsprobleme und die Sicherheitstechnik muss von dem selben Hersteller kommen, wie die Standardsteuerungen.

Aus der DE 199 28 517 ist ein Steuerungssystem zum Steuern von sicherheitskritischen Prozessen bekannt, mit einer ersten Steuereinheit zum Steuern von sicherheitskritischen Prozessen und mit einer Signaleinheit, die über E/A-Kanäle mit dem sicherheitskritischen Prozess verknüpft ist und ferner mit einem Feldbus, über den die erste Steuereinheit und die Signaleinheit verbunden sind und mit einem Busmaster zum Steuern der Kommunikation auf dem Feldbus, wobei die erste Steuereinheit und die Signaleinheit sicherheitsbezogene Einrichtungen aufweisen und somit sichere Einheiten sind, um eine fehlersichere Kommunikation zu gewährleisten und wobei der Feldbus einen umlaufenden Telegrammverkehr zwischen einzelnen, an den Feldbus angeschlossenen Einheiten bereitstellt. Um eine fehlersichere Kommunikation der an dem sicherheitskritischen Prozess beteiligten Einheiten zu gewährleisten und gleichzeitig die Verwendung von Standbardbausteinen als Busmaster zu ermöglichen, wurde gemäß vorgenannter Patentschrift vorgeschlagen, den Busmaster getrennt von der ersten Steuereinheit und der Signaleinheit an den Feldbus anzuschließen und die erste Steuereinheit bezogen auf eine Umlaufrichtung des Telegrammverkehrs vor der Signaleinheit anzuordnen, wobei die erste Steuereinheit ferner Mittel aufweist, um Telegrammdaten, die an die Signaleinheit adressiert sind, durch fehlersichere Telegrammdaten zu ersetzen.

Ein wesentlicher Nachteil des dort vorgeschlagenen Weges besteht jedoch darin, dass die sichere Steuereinheit zwar grundsätzlich mit jeder Signaleinheit kommunizieren kann, dies jedoch nur, sofern ihr die Struktur des Netzwerkes bekannt ist. Ferner kann die sichere Steuereinheit lediglich das Ersetzen von bereits vorhandener Information durch sichere Information bewirken.

Eine Aufgabe der Erfindung ist es daher, unabhängig von der Struktur der Netzwerke und der Protokolle, sicherheitstechnische Applikationen ausführen zu können, welches in zukünftigen Systemen immer notwendiger wird. Eine weitere Aufgabe der Erfindung ist die Trennung der sicheren Steuerungsfunktionen sowohl von der Standard-Steuerungsfunktion als auch von einer Netzwerk-Masterfunktion.

Die erfindungsgemäßen Lösungen sind in den anhängenden Ansprüchen wiedergegeben, wobei vorteilhafte und/oder bevorzugte Ausführungsformen und Weiterbildungen Gegenstand von Unteransprüchen sind.

Die Erfindung schlägt somit zum Betreiben wenigstens eines nicht-sicherheitskritischen Applikationsprozesses und wenigstens eines sicherheitskritischen Applikationsprozesses ein Datenverarbeitungs- und - übertragungssystem vor, mit einem Datenübertragungsnetzwerk, wenigstens einem an das Netzwerk angeschlossenen nicht-sicherheitsbezogenen Netzwerkelement, das mit dem nicht-sicherheitskritischen Applikationsprozess verknüpft ist und mit wenigstens einem sicherheitsbezogenen Netzwerkelement, das mit dem sicherheitskritischen Applikationsprozess verknüpft ist, sowie mit wenigstens einer an das Netzwerk angeschlossene Mastereinrichtung, und einer von der Mastereinrichtung separat an das Netzwerk angeschlossenen sicherheitsbezogenen Servereinrichtung, wobei die sicherheitsbezogene Serverreinrichtung den wenigstens einen sicherheitskritischen Applikationsprozesses steuert, und zwar durch Verarbeitung von sicherheitsrelevanten Daten, die zur Steuerung des sicherheitskritischen Applikationsprozesses notwendig sind und durch Organisation der Übertragung der sicherheitsrelevanten Daten über wenigstens eines der Netzwerkelemente und/oder die Mastereinrichtung über das Netzwerk, und wobei die Mastereinrichtung zum Bereitstellen von Betriebsmitteln zur Übertragung der sicherheitsrelevanten Daten und Verwalten von Zugriffsregeln während der Datenübertragung über das Netzwerk ausgebildet ist.

Ein wesentlicher Vorteil der Erfindung besteht somit darin, dass die sicherheitsbezogene Servereinrichtung gemäß der Erfindung unabhängig von jeglicher Standardsteuerung und Netzwerk-Mastereinrichtung, auf beliebigen Netzwerkstrukturen und auch mit Single-Master-Strukturen betrieben werden kann. Die Erfindung ist somit bevorzugt auch für die Integration der Sicherheitstechnik in Ethernet basierten Systemen verwendbar.

Nachfolgend werden Ausführungsbeispiele der Erfindung unter Bezugnahme auf die beigefügten Zeichnungen näher erläutert und beschrieben. In den Zeichnungen zeigen:
- Fig. 1: stark vereinfacht und schematisiert die Darstellung eines Ausführungsbeispiels der Erfindung für ein Single-Master-Netzwerk,
- und:
- Fig. 2: stark vereinfacht und schematisiert die Darstellung eines Ausführungsbeispiels von Kommunikationsbeziehungen bei Anwendung der Erfindung in web-basierten Systemen.

Die Erfindung sieht zum Steuern wenigstens eines Gesamt-Applikationsprozesses grundsätzlich vor, diesen in wenigstens zwei Prozesse aufzuteilen, einen Applikationsprozess, der durch sicherheitsbezogene Einrichtung zu steuern ist, und der also ein sicherheitskritischer Applikationsprozess ist, und einen Applikationsprozess, der durch nicht-sicherheitsbezogene Einrichtungen gesteuert werden kann, d.h. einen sicherheitskritischen Applikationsprozess. Das Steuern dieser wenigstens zwei Prozesse wird über ein gemeinsames Datenverarbeitungs- und -übertragungssystem, welches ein Datenübertragungsnetzwerk mit daran angeschlossenen Netzwerkelementen umfasst, und unabhängig voneinander betrieben.

Da der Anteil von nicht-sicherheitskritischen Applikationsprozessen, nachfolgend auch als Standard-Applikationsprozess bezeichnet, in der Regel weitaus höher ist als der Anteil von sicherheitskritischen Applikationsprozessen ist, ist die Steuerung des nicht-sicherheitskritischen Applikationsprozess zweckmäßig die führende. Daher wird einer, einen solchen Standard-Prozess steuernden Vorrichtung auch bevorzugt eine Netzwerk-Mastereinrichtung zugeordnet, die grundsätzlich genutzt wird, um Daten von an das Netzwerk angeschlosssenen E/A-Geräten bzw. E/A-Netzwerkelementen, die mit dem Applikationsprozess verknüpft sind, zu erhalten bzw. diesen Daten zuzuweisen. Die Netzwerk-Mastereinrichtung stellt somit auch die Betriebsmitteln bereit zur Übertragung von Daten über das Netzwerk und verwaltet die Zugriffsregeln während der Datenübertragung über das Netz.

Der sichere Applikationsprozess ist in eine separate Sicherheitssteuerung ausgelagert, welche hinsichtlich der für den sicherheitskritischen Applikationsprozess erforderlichen Kommunikation als sicherheitsbezogene Servereinrichtung, nachfolgend auch als "Safety-Server" bezeichnet, ausgebildet ist. Diese verarbeitet die sicherheitsrelevanten Daten, die zur Steuerung des sicherheitskritischen Applikationsprozesses notwendig sind und organisiert die Übertragung der sicherheitsrelevanten Daten über wenigstens eines der Netzwerkelemente und/oder die Mastereinrichtung über das Netzwerk. Da die Netzwerk-Mastereinrichtung für die Betriebsmittel und Zugriffsregeln zuständig ist, ist der erfindungsgemäße Einsatz der sicherheitsbezogenen Servereinrichtung grundsätzlich von der Struktur des Datenübertragungsnetzwerkes unabhängig.

In Single-Master-Datenübertragungsnetzwerken agiert die sicherheitsbezogene Servereinrichtung hinsichtlich der Kommunikation über das Datenübertragungsnetzwerk somit bevorzugt als Kommunikations-Slave und ist hierfür mit entsprechenden Kommunikationsschnittstellen ausgestattet.

Zur applikationsspezifischen Anpassung wird eine Zuordnung der am Netzwerk angeschlossen Netzwerkelementen vorgenommen, die für die Steuerung des sicherheitskritischen Applikationsprozesses relevant sind. Dies erfolgt zweckmäßig über eine an das Netzwerk angeschlossene Zuordnungseinrichtung, welche auch in der Mastereinrichtung integriert sein kann, und nachfolgend auch als "Safety-Agent" bezeichnet wird. Durch diese kann die sicherheitsbezogene Servereinrichtung in die Lage versetzt werden, die sicherheitsrelevante Kommunikation zwischen den Netzwerkelementen, die für die Steuerung des sicherheitskritischen Applikationsprozesses relevant sind, also insbesondere zwischen denen, die sichere E/A-Geräte sind, zu organisieren.

In der Praxis ist der Safety-Agent hierzu mit Funktionseinheiten ausgestattet, über welche er Informationen über alle, zumindest über die für den sicherheitskritischen Prozess notwendigen, angeschlossenen sicheren und nicht-sicheren Netzwerkelemente und deren notwendigen Kommunikationsbeziehungen untereinander erhält oder automatisch durch Zusammenwirken mit der Netzwerkmastereinrichtung ermittelt.

Darauf basierend initialisiert der Safety-Agent die Mastereinrichtung, beispielsweise aktiv durch Erzeugung entsprechender Verbindungslisten oder passiv durch Beschreibung von notwendigen Verbindungen, woraufhin die Mastereinrichtung das Netzwerk in einer Art und Weise betreibt, dass auf Basis der Standard-Kommunikation eine übergelagerte Sicherheits-Kommunikation zwischen sicherheitsbezogenen Netzwerk-Teilnehmern ermöglicht wird, wie z.B. mehrere Punkt-zu-Punkt-Beziehungen zwischen der sicherheitsbezogenen Servereinrichtung und den sicheren E/A-Geräten, wobei diesbezüglich die Servereinrichtung bevorzugt als sicherheitsbezogener Master und die E/A-Geräte als sicherheitsbezogene Slaves eingerichtet werden.

Insbesondere bei Single-Master-Netzwerken sorgt der Safety-Agent im laufenden System in praktischer Ausführung dafür, dass die für den Safety-Server relevanten Informationen des Netzwerkes zur Verfügung stehen. Diese sind in erster Linie die kompletten sicheren Protokolldaten von sicheren Eingangsgeräten, aber auch ggf. Eingangsdaten von Standard-Eingangsgeräten und Informationen aus dem Applikationsprozess an sich. Ferner kann der Safety-Agent im laufenden System darüber hinaus dafür sorgen, dass die Ergebnisse des Safety-Servers nach Verarbeitung von sicherheitsrelevanten Daten an die relevanten Konsumenten innerhalb des Netzwerkes verteilt werden. Diese Ergebnisse sind also insbesondere die sicheren Protokolldaten an die sicheren Ausgangsgeräte, ggf. auch Ausgangsdaten an Standard-Ausgabegeräte und Informationen der separaten Sicherheitssteuerung an den Standard-Applikationsprozess.

Ein wesentlicher Vorteil der Erfindung ist somit auch darin zu sehen, dass die Erfindung sowohl bei Multi-Master-Netzwerken als auch bei Single-Master-Netzwerken anwendbar ist. Ferner ergeben sich äußerst flexible und vielseitige Einsatzmöglichkeiten durch die Netzwerkunabhängigkeit der Erfindung. Dies bildet sich insbesondere bei Netzwerken unbekannter Herkunft, wie es beispielsweise in Internet basierten Applikationen häufig der Fall ist, als ein zusätzlicher Vorteil heraus.

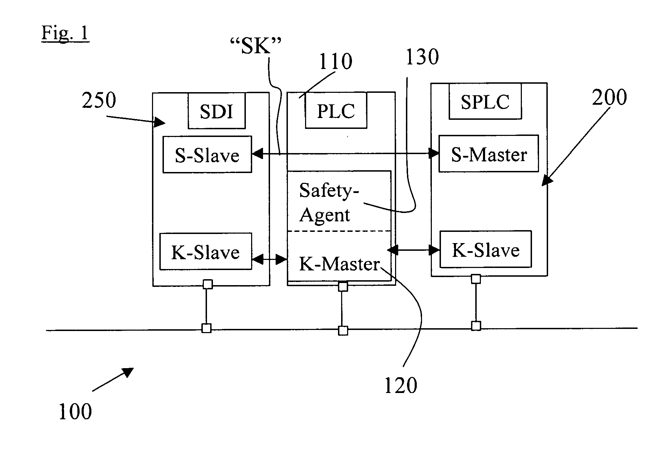

Ein beispielhaftes, insgesamt mit 100 gekennzeichnetes Netzwerk ist in Figur 1 stark vereinfacht und schematisiert dargestellt. Das Netzwerk 100 in dem dargestellten Beispiel ist ein Ethernet-Netzwerk, welches einen zentralen Netzwerk-Master umfasst und also ein Beispiel für ein Single-Master-Netzwerk ist.

An den Bus des Netzwerkes ist eine Standard-Steuereinheit 110 mit programmierbarer Logik (PLC-programmable logic control) angeschlossen. Die Steuereinheit 110 ist zum Steuern eines nicht-sicheren bzw. Standard-Applikationsprozesses angepasst und beinhaltet einen Netzwerk-Master 120, um Daten von mit diesem Applikationsprozess verknüpften, an das Netzwerk angeschlosssenen Netzwerkelementen zu erhalten bzw. diesen Daten zuzuweisen. Der bei Figur 1 auch als K-Master bezeichnete Netzwerk-Master 120, gewährleistet also grundsätzlich die Kommunikation zwischen den einzelnen Netzwerkteilnehmern 110, 200, 250 im Netzwerk.

Einzelne für den nicht-sicheren und also Standard-Applikationsprozeß angeschlossene nicht-sichere Geräte bzw. Netzwerkelemente sind aus Gründen der Einfachheit halber bei Fig. 1 nicht dargestellt und die Kommunikation zwischen diesen und den in der Standard-Steuereinrichtung 110 integrierten K-Master 120 erfolgt auf eine, an und für sich einem Fachmann bekannte, Netzwerk-abhängige spezifische Weise.

Ferner ist in den Netzwerk-Master 120 ein vorstehend beschriebener Safety-Agent 130 integriert, der für die Kommunikation zwischen den nachfolgend beschriebenen sicherheitsbezogenen Einrichtungen Sorge trägt.

Dargestellt sind zwei an den Netzwerk angeschlossene sicherheitsbezogene Einrichtungen, zum einen eine separate Sicherheitssteuerung 200 als die sicherheitsbezogene Servereinrichtung, bei Figur 1 auch als SPLC (Safetyprogrammable logic control) wiedergegeben, und zum anderen als ein sicherheitsbezogenes E/A-Netzwerkelement eine sicherheitsbeszogene Dateneingangseinheit 250, beispielsweise einen sicherheitskritischen Teilprozeß überwachenden Sensor umfassend, bei Figur 1 auch als SDI (Safety-data-input) 250 bezeichnet.

Beide sicherheitsbezogenen Einrichtungen sind in Bezug auf das Netzwerk 100, an welches diese angeschlossen sind, als reine Kommunikations-Slaves angeschlossen, wobei sie die hier notwendigen und an und für sich für einen Fachmann bekannten Einrichtungen und Mechanismen enthalten.

Hinsichtlich der grundsätzlichen Kommunikation über das Netzwerk agieren sowohl die sicherheitsbezogene Servereinrichtung 200 als auch die sicherheitsbezogenen E/A-Geräte 250 als reine Kommunikations-Slaves, wobei der Standard-Steuereinrichtung 110 der Netzwerk-Master als Kommunikations-Master 120 zugeordnet ist. Der Kommunikationsmaster 120 wird durch den integrierten Safety-Agent 130 derart initialisiert, dass auf der Basis der Standard-Kommunikation über das Netzwerk 100 auch eine überlagerte Sicherheitskommunikation, bei Fig. 1 mit dem durch "SK" gekennzeichneten Doppelpfeil angezeigt, zwischen der zweckmäßig als Sicherheits-Master eingerichteten und fungierenden sicherheitsbezogenen Steuerungseinrichtung 200 und der als Sicherheits-Slave eingerichteten und fungierenden E/A-Einrichtung 250 möglich ist.

Wie vorstehend beschrieben erhält oder ermittelt der Safety-Agent 130 alle für den sicherheitskritischen Prozess notwendigen Informationen und Kommunikationsbeziehungen und trägt damit Sorge, dass diese relevanten Informationen auch für die am sicheren Applikationsprozess beteiligten Einrichtungen zur Verfügung stehen.

Mit Hilfe eines solchen, jedoch nicht notwendiger Weise in den Netzwerk-Master intergrierten Safety-Agenten, muss die sicherheitsbezogene Steuereinrichtung 200 nicht mehr die Struktur des Gesamtnetzwerkes kennen, da quasi eine überlagerte sicherheitsbezogene Netzstruktur aufgebaut wird, welche über das Standard-Netzwerk unter Nutzung der vom Kommunikations-Master bereitgestellten Betriebsmitteln und Zugriffsregeln betrieben werden kann.

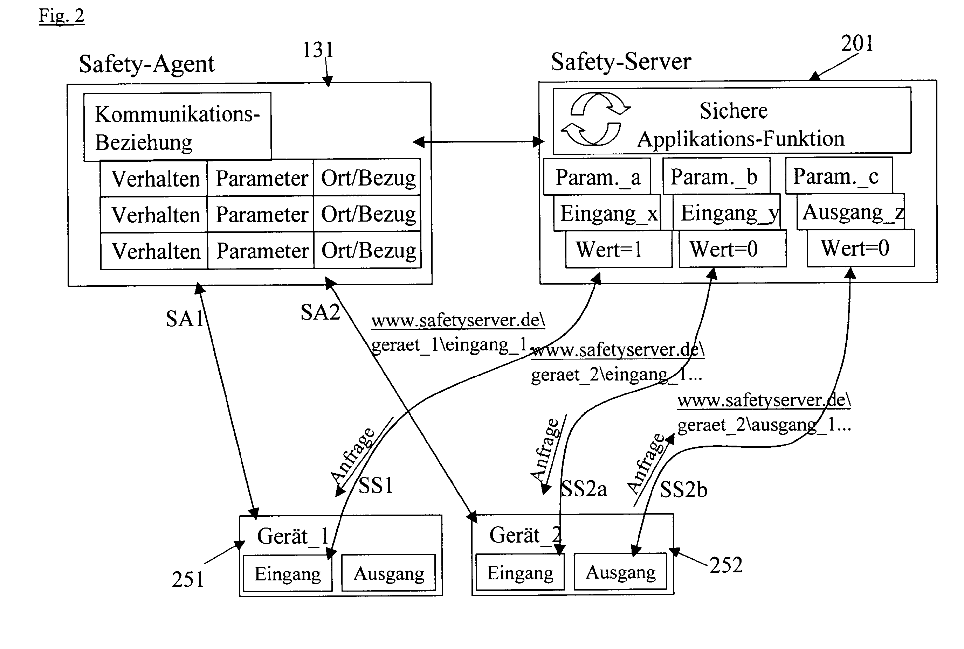

Nachfolgend wird auf das in Figur 2 stark vereinfacht und schematisiert dargestellte Ausführungsbeispiel von Kommunikationsbeziehungen bei Anwendung der Erfindung in Web-basierten Systemen, als ein Beispiel für die Anwendung bei Multi-Master-Netzwerken, näher eingegangen.

In dem bei Figur 2 dargestellten Beispiel ist eine sicherheitsbezogene Stervereinrichtung 201 mit darauf abarbeitbaren sicheren Applikationsfunktion mit einem nicht weiter dargestellten Inter- oder Intra-Net-Netzwerk verbunden. Zweckmäßig ist der Einfachheit halber zumindest während einer Projektierungsphase wiederum ein Saftety-Agent 131 an dieses Netzwerk angeschlossen, der zunächst Information darüber erhält oder ermittelt, welche Netzwerkteilnehmer mit sicherheitsrelevanten Daten versorgt werden müssen bzw. solche erhalten müssen. Diese Überprüfungsphase ist bei Figur 2 durch die mit SA1 und SA2, SA3 bezeichneten Doppelpfeilen dargestellt. Aus diesen Informationen wird anschließend die notwendige Information für das sichere Applikationsprogramm bzw. sichere Applikationsfunktion, also insbesondere eine erforderliche Parameterbeschreibung, und für den sicheren Signalpfad, also insbesondere erforderliche Angaben wie Ort, Bezug und Verhalten, erzeugt.

Die Parameterbeschreibung definiert z.B. Variablen für das sichere Applikationsprogramm sowie die Richtung der Kommunikation, d.h. die Beziehungen zwischen Server und Client. Angaben hinsichtlich Ort, Bezug geben die Kommunikationsquelle/Senke an. Zum Beispiel die vollständige Zugriffsadresse über Webmechanismen. In dieser Beschreibung ist zweckmäßig auch die für die Sicherheitstechnik wichtige Punkt-zu-Punkt-Beziehung zwischen Quelle und Senke sowie der zeitlich Bezug enthalten. Das Verhalten wiederum gibt die Erwartungshaltung an die Kommunikation, also z.B. die Reaktionszeit oder die überwachte Abschaltzeit, und die Daten wieder. In dieser Beschreibung ist zweckmäßig auch die Ersatzwertstrategie enthalten, welche das Verhalten von Variablen bei Störungen der Kommunikation oder Geräte sowie bei Abweichungen von dem erwartenden Verhalten definiert.

Diese notwendigen Informationen dienen somit zur Organisation der Übertragung der sicherheitsrelevanten Daten über wenigstens eines der Netzwerkelemente und/oder die Mastereinrichtung über das Netzwerk, und definieren eindeutige Kommunikationsbeziehungen SS1, SS2a oder SS2b zwischen der sicherheitsbezogenen Servereinrichtung 201 und den sicherheitsbezogenen Geräten 251, 252, einschließlich der Adressen, unter denen diese im Netzwerk angesprochen werden können. Diese für die Kommunikationsbeziehungen notwendigen Information werden anschließend der sicherheitsbezogenen Servereinrichtung 201 und ggf. auch an die sicherheitsrelevanten E/A-Geräte 251 und 252 übergeben.

Soweit die Adressen bekannt sind, können diese auch über eine direkte Geräteprojektierung den Endgeräten bzw. der wenigstens einen sicheren Steuerung zugeführt werden. In diesem Fall ist eine automatische Safety-Agenten-Funktion nicht notwendig.

So definiert z.B. gemäß Fig. 2 die Kommunikationsbeziehung SS1 eine eindeutige Punkt-zu-Punkt-Beziehung zwischen der unter der Adresse www.safetyserver.de\ im Netzwerk auffindbaren sicherheitsbezogenen Servereinrichtung 201 und dem Eingang 1 des Gerätes 1, die Kommunikationsbeziehung SS2a eine eindeutige Punkt-zu-Punkt-Beziehung zwischen der Servereinrichtung 201 und dem Eingang 1 des Gerätes 2 und die Kommunikationsbeziehung SS2b eine eindeutige Punkt-zu-Punkt-Beziehung zwischen der sicherheitsbezogenen Servereinrichtung 201 und dem Ausgang 1 des Gerätes 2.

Die als Safety-Server arbeitende sicherheitsbezogene Steuerung 201 arbeitet das sichere Applikationsprogramm bzw. die sichere Applikationsfunktion ab und stellt die Ablaufergebnisse wiederum über das Netzwerk zur Verfügung. Diese Ablaufergebnisse werden aus den sicheren Eingangsinformationen gebildet.

Die Kommunikation zwischen dem Safety-Server und den bei Figur 2 mit den Bezugsziffern 251 bzw. 252 gekennzeichneten sicheren Geräten 1 und 2 kann dann wieder über die Standardmechanismen des zugrundeliegenden Netzwerkes, im vorliegenden Beispielfall also über die Standard-Internetmechanismen organisiert werden. Der Safety-Server 201 und die sicheren Geräte 251 und 252 erhalten somit lediglich die Daten für die erforderlichen sicherheitsrelevanten Kommunikationsbeziehungen untereinander vom Safety-Agenten 131. Daraufhin organisiert die sicherheitsbezogene Steuerung 201 die Übertragung der sicherheitsrelevanten Daten über das Netzwerk, so dass die sicherheitsbezogenen Einrichtungen in der Lage sind, auf die sicherheitsrelevanten Daten der sicherheitsbezogenen Steuerung 201 bzw. der sicherheitsbezogenen Geräte zuzugreifen.

Wie beim Standard-Internet arbeitet auch das System gemäß der Erfindung unabhängig vom unterlagerten Netzwerk. Lediglich die Angabe der Endpunkte, also z.B. die Webadresse ist notwendig.

In Feldbussen oder Ethernet-Applikationen mit zentralem Master kann dieser Mechanismus ebenso eingesetzt werden wie bei funkbasierten oder Multi-Master-Netzwerken. Gerade weniger performante Applikationen, wie sie beispielsweise in der Gebäudetechnik in der Regel vorhanden, können somit sicherheitstechnische Lösungen mit Standard-Netzwerken einfach und ohne zusätzliche Netzwerk-Installation-Konfiguration umsetzen.

Im Unterschied zu vorhandenen Lösungen kann die als separater Safety-Server fungierende sicherheitsbezogene Steuerung mit unterschiedlichen Standard-Steuerungen und Netzwerken zusammenarbeiten. Weiterhin kann die Performance der sicheren Applikation erhöht werden, ohne Netzwerkstrukturen oder Applikationen neu zu strukturieren. Die sicherheitsbezogene Steuerungsfunktionalität kann im untergelagerten Netzwerk nicht nur als Master sondern auch als Slave eingesetzt werden.

Zusammenfassend bearbeitet der Safety-Server ihm zugewiesene Daten, welche vom Netzwerk zu ihm transportiert werden, und stellt die Ergebnisse dem Netzwerk wieder zur Verfügung. Der Safety-Server kann folglich in bevorzugter Ausgestaltung Anfragen vom Netzwerkmaster und/oder einem anderen Teilnehmer erhalten, sicherheitsrelevante Daten zu bearbeiten. Als Ergebnis liegt eine sichere Information, z.B. als vollständig gesichertes Protokoll, vor. Dieses kann durch den Netzwerkmaster abgeholt und versandt werden. Insbesondere Internet-basiert können auch die anderen Teilnehmer selbständig die Daten abholen und/oder dem Safety-Server zur Verfügung stellen. In diesem Fall wird der Safety-Server quasi parallel zu Netzwerk-Mastereinrichtungen und Standard-Steuerungen betrieben und das Netzwerk transportiert die sicherheitsrelevanten Daten im wesentlichen unabhängig vom Standard-Netzwerkverkehr.

Treten Fehler, wie z.B. Telegrammverlust, -vertausch, - verzögerung und/oder fehlerhafte Adressierung in den Komponenten auf, insbesondere in Standard-Komponenten, wie Netzwerk, Netzwerkmaster, etc., oder auch im Safety-Agent, werden diese vom überlagerten Sicherheitsprotokoll in den sicherheitsbezogenen Teilnehmern erkannt, welche dann sicherheitsrelevante Reaktionen ausführen, z.B. das Abschalten bestimmter Aktoren oder Teileinheiten bewirken, um insbesondere den sicherheitskritischen Applikationsprozess in einen sicheren Zustand überzuführen.

Die Sicherheitssteuerung ist somit von einer StandardSteuerung unabhängig. Mit den von der Sicherheitssteuerung dem Netzwerk zur Verfügung gestellten Ergebnissen können z.B. auch mehrere Standard-Prozesse bedient werden, welches zu einer Kostenreduzierung führt. Ferner kann bei Ausfall einer Standardfunktion die Verfügbarkeit der Sicherheitsfunktionen erhalten bleiben.

Es versteht sich, dass die vorstehend aufgezeigten Merkmale der Erfindung nicht nur in den jeweils beschriebenen Kombinationen, sondern auch in anderen Kombinationen oder in Alleinstellung verwendbar sind, sofern nicht ausdrücklich anders angeführt, ohne hierdurch den Rahmen der vorliegenden Erfindung zu verlassen.

## Patentansprüche

1. Datenverarbeitungs- und -übertragungssystem zum Betreiben wenigstens eines nicht-sicherheitskritischen Applikationsprozesses und wenigstens eines sicherheitskritischen Applikationsprozesses, umfassend
- ein Datenübertragungsnetzwerk,
- wenigstens ein an das Netzwerk angeschlossenes nicht-sicherheitsbezogenes Netzwerkelement, das mit dem nicht-sicherheitskritischen Applikationsprozess verknüpft ist und wenigstens ein sicherheitsbezogenes Netzwerkelement, das über wenigstens einen E/A-Kanal mit dem sicherheitskritischen Applikationsprozess verknüpft ist,
- wenigstens eine an das Netzwerk angeschlossene Mastereinrichtung, und
- eine von der Mastereinrichtung separat an das Netzwerk angeschlossene sicherheitsbezogene Servereinrichtung zur Steuerung des wenigstens einen sicherheitskritischen Applikationsprozesses durch Verarbeitung von sicherheitsrelevanten Daten, die zur Steuerung des sicherheitskritischen Applikationsprozesses notwendig sind und durch Organisation der Übertragung der sicherheitsrelevanten Daten über wenigstens eines der Netzwerkelemente und/oder die Mastereinrichtung über das Netzwerk,
wobei die Mastereinrichtung zum Bereitstellen von Betriebsmitteln zur Übertragung der sicherheitsrelevanten Daten und Verwalten von Zugriffsregeln während der Datenübertragung über das Netzwerk ausgebildet ist.

2. Datenverarbeitungs- und -übertragungssystem nach Anspruch 1, wobei an das Netzwerk eine Zuordnungseinrichtung angeschlossen ist, welche eine Zuordnung der am Netzwerk angeschlossen Netzwerkelementen vornimmt, die für die Steuerung des sicherheitskritischen Applikationsprozesses relevant sind.

3. Datenverarbeitungs- und -übertragungssystem nach Anspruch 2, wobei die Zuordnungseinrichtung ausgebildet ist, festzustellen, welche Netzwerkteilnehmer mit sicherheitsrelevanten Daten versorgt werden müssen bzw. solche erhalten müssen, sowie für die sicherheitsbezogene Servereinrichtung erforderliche Parameterbeschreibungen, und Angaben wie Ort, Bezug und Verhalten zu erzeugen und diese Informationen der sicherheitsbezogenen Servereinrichtung zu übergeben, welche basierend auf diesen Informationen die Übertragung der sicherheitsrelevanten Daten über das Netzwerk organisiert.
